(19) Europäisches Patentamt
European Patent Office
Office européen des brevets

(11) **EP 2 326 503 B1**

# (12) EUROPEAN PATENT SPECIFICATION

(45) Date of publication and mention
of the grant of the patent:
**23.08.2017 Bulletin 2017/34**

(21) Application number: **09794731.1**

(22) Date of filing: **01.07.2009**

(51) Int Cl.:
**B32B 7/02** *(2006.01)*     **B32B 29/00** *(2006.01)*

(86) International application number:
**PCT/SE2009/050853**

(87) International publication number:
**WO 2010/005377 (14.01.2010 Gazette 2010/02)**

(54) **MECHANO-ACTIVE MATERIALS**

MECHANO-AKTIVE MATERIALIEN

MATÉRIAUX MÉCANO-ACTIFS

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(30) Priority: **07.07.2008 US 78513**

(43) Date of publication of application:
**01.06.2011 Bulletin 2011/22**

(73) Proprietor: **Innventia AB
114 86 Stockholm (SE)**

(72) Inventors:
• **GRANBERG, Hjalmar
S-602 16 Norrköping (SE)**
• **LINDSTRÖM, Mikael
S-131 50 Saltsjö-duvnäs (SE)**
• **FORSBERG, Sven
S-856 31 Sundsvall (SE)**
• **BERTHOLD, Fredrik
S-182 55 Djursholm (SE)**
• **RAZAVI, Farvash
S-136 46 Handen (SE)**
• **HOLMBERG, Veronica
S-117 57 Stockholm (SE)**

• **BÉLAND, Marie-Claude
S-112 45 Stockholm (SE)**

(74) Representative: **Zacco Sweden AB
Valhallavägen 117
Box 5581
114 85 Stockholm (SE)**

(56) References cited:
**EP-A2- 1 894 482      EP-A2- 1 894 482
WO-A1-03/026892    US-A- 4 530 440
US-A- 4 530 440      US-A1- 2005 053 776**

• **HOLMBERG, V.: 'Creating temperature
stimulated paper muscles by printing and
lamination' MSC THESIS, [Online] April 2008,
LINKOPING UNIVERSITY, DEPARTMENT OF
SCIENCE AND TECHNOLOGY, NORRKOPING,
SWEDEN, pages 1 - 58, XP003026051 Retrieved
from the Internet: <URL:MSc Thesis>**
• **HOLMBERG V: "Creating temperature stimulated
paper muscles by printing and lamination", MSC
THESIS IN MEDIA TECHNOLOGY AND
ENGINEERING, LINKÖPING UNIVERSITY, 1 April
2008 (2008-04-01), pages 1-66, XP003026051,**

## Description

### Field of Invention

This invention concerns the technical field of a method of manufacturing a layered mechano-active material, and the use of a layered mechano-active material.

### Background

Paper electronics ranging from electronically controlled paper displays to interactive paper, RFID and intelligent packaging has gained a strong interest from the paper industry, continuously seeking new applications.
It is known from previous research that the hygro expansion of paper depends on changes in room humidity (see e.g. "Pappersteknik", Edited by Christer Fellers and Bo Norman ,Royal Institute of Technology, Stockholm, Sweden, 1996). The effect of humidity and temperature changes on the mechanical and dimensional characteristics of a paper sheet is thoroughly described in e.g. "Handbook of Physical Testing of Paper", Vol 1, 2nd edition, edited by Richard E. Mark et al, Chapter 3, p 115, 2002.
It is moreover known from previous research that non-controlled curl may occur in paper under certain conditions, a phenomenon that converters and printers aim to avoid, as this causes unwanted difficulties in handling paper and printed products. Curl is defined as the out-of-plane bending of paper, usually as a result of applied moisture (as in printing) or temperature change (as may occur in converting).

### Description of the invention

The present invention relates to the use of a layered mechano-active material according to independent claim 1 as well as a method of manufacturing a layered mechano-active material according to independent claim 12.
This invention will first be presented by the equations that govern the bending of a layered, planar structure where each layer extends differently when exposed to either a temperature or humidity change. The expansion caused by humidity can be described by:

$$\frac{\Delta L}{L} = H \cdot \beta \tag{1}$$

where $\Delta L$ denotes the expansion, $L$ the original length, and $H \cdot \beta$ describes the relative hygro expansion. Since the expansion can be triggered by a combination of changes in humidity and temperature, $H \cdot \beta$ is substituted by $\Delta L/L$ for each layer.

$$A = \sum_{k=1}^{N} E_k \cdot (z_k - z_{k-1}) \tag{2}$$

$$B = \frac{1}{2} \sum_{k=1}^{N} E_k \cdot (z_k^2 - z_{k-1}^2) \tag{3}$$

$$D = \frac{1}{3} \sum_{k=1}^{N} E_k \cdot (z_k^3 - z_{k-1}^3) \tag{4}$$

$$F = \sum_{k=1}^{N} \Delta L_k / L \cdot E_k \cdot (z_k - z_{k-1}) \tag{5}$$

$$G = \frac{1}{2} \sum_{k=1}^{N} \Delta L_k / L \cdot E_k \cdot (z_k^2 - z_{k-1}^2) \tag{6}$$

$$\frac{1}{R} = K = \frac{G \cdot A - F \cdot B}{D \cdot A - B^2} \qquad (7)$$

where

$E_k$ denotes the elastic modulus of each layer
$z_{k-1}$ and $z_k$ denote the beginning and the end of each layer in the thickness direction $R$ denotes the bending radius of the sheet.

The present invention in a first aspect relates to the use of and a method of manufacturing layered mechano-active materials, and in particular such materials comprising at least one first fiber-based layer, and at least one second layer capable of releasing tension, whereby the extension of the material is anisotropically controllable by heat and/or moisture.

By "anisotropically controllable" is meant that the physical properties of a structure are controllable in the thickness direction, i.e. the z-direction. The anisotropic structure may vary along its extension, along e.g. a surface plane, and in various directions, such as perpendicularly to said extension, to obtain different effects.

Based on the above presented equations it is appreciated that the bending of a layered mechano-active material, e.g. in the form of a sheet, depends on the stimuli-responsive expansion/contraction, elastic modulus, and thickness of each layer. The equations also give guidance to the person skilled in the art as to the design of the structure by choosing the right combination of materials and thicknesses to obtain the desired stimuli-responsivity of the invention.

Controlled heating of the mechano-active material controls the swelling and / or contraction and / or melting of different layers or parts thereof during final use. A combination of different phenomena influencing the extension of the material, such as bending thereof, can then occur:

- A layer swells or contracts directly due to the temperature difference.
- A layer swells or contracts due to the dewatering or moisture uptake due to the temperature difference.
- A layer swells or contracts due to the electrochemical phenomena that are induced by the temperature difference.
- The stiffness of one layer is decreased due to the temperature difference (e.g. softening or melting). This releases a built-in tension within the sheet which consequently bends.

In one embodiment, the extension of the fibers of the first layer is not materially affected by the heat and/or moisture, with only the second layer effecting the change of extension. The swelling / contracting / melting layers of the mechano-active material can be a combination of pulps that are processed differently (e.g refinement and carboxymetylation), that are based on different wood or plant species, that have different fiber orientation, or that partially or totally include polymers or plastic.

Mechano-active materials may change their extension in a reversible as well as an irreversible fashion, thus providing materials capable of a wide array of bending patterns. Reversible materials may return to their original extension when the heat and/or moisture returns to the normal condition(s).

Very strong and slow mechano-active materials may be prepared, as well as weak but quickly responding mechano-active materials. The mechano-active material used and/or manufactured according to the invention may be in the form of a sheet, such as a planar sheet, and can be mass produced at a low cost using sustainable materials, e.g. in a paper machine. The mechano-active material may also be manufactured using a robot applying the layers.

The fibers of the at least one first fiber-based layer are in one embodiment of the invention chosen from the group consisting of wood based fibers, plant based fibers such as cotton, microfibrillated cellulose, and synthetic fibers. The fibers may thus be of renewable or non-renewable origin. The at least one first fiber-based layer may contain fibers formed as a gradient in the z-direction.

The total number of layers of the layered mechano-active material is in the interval of from 2 to 1000, such as from 4 to 12 or from 5 to 11. In one embodiment, the total number of layers is in the interval of from 6 to 10. Each layer of the layered product used and/or manufactured according to the invention may have a thickness in the interval of from 1 nm to 1 cm, such as from 5 nm to 0.5 cm or from 15 nm to 0.1 cm.

Naturally, the number of layers needs to consist of at least one fiber based layer and at least one layer capable of releasing tension. The selection of a suitable number of layers, kinds of layers and the thickness of each layer are well within the skills of the person skilled in the art, having at his disposal the above-mentioned equations and the description herein.

In one embodiment of the invention, the at least one layer capable of releasing tension comprises an agent chosen from the group consisting of wax, fat, stearin, synthetic fibers, sodium salt such as sodium chloride, synthetic fibers, polymer powder, polymer particles, and polymer films. Examples of waxes are beeswax, montan wax, lanolin, carnauba wax, paraffin, silicone wax, stearine, AKD (alkyl keten dimer), lard, butter, olive oil, jojoba oil, and mineral oil. Polymer films may be made out of e.g. microfibrillated cellulose, polystyrene sulphonate, polyethylene imine, carrageenan, gelatine, polydiallyl-dimethyl-ammoniumchloride (PolyDADMAC), starch, polypyrrole, Poly 3,4-ethylenedioxythiophene (PEDOT). The polymer film(s) may be in the form of thin films.

The agent(s) of the second layer(s) capable of releasing tension is/are provided on at least one first layer in order to stabilize a strained state. The layer capable of releasing tension will then in final use change its stiffness as a result of an external stimulus, e.g a temperature or moisture change.

When manufacturing a mechano-active material according to one embodiment of the invention, use is made of fiber-based layer(s) having high glass transition (Tg) and melting temperature (Tm). A specific strained state (form or curvature or texture of the starting material) is then produced at a temperature below Tg of the fiber-based layer(s). This strained state is retained when the layer(s) or agent within layer(s) capable of releasing tension is/are added in soft state (above Tg or Tm) and allowed to harden and become stiff enough (depending on e.g. the respective Young's modulus and thickness described by the equations herein) to support the new state without additional force. When an external stimulus capable of softening the layer capable of releasing tension is applied in final use (e.g moisture or temperature), the material will revert to its original extension in its non-strained state. For an exemplary choice of materials, see table 1.

Table 1. Glass transition and melting temperature, and Young's modulus of some materials that may be used as such or in mixture, in accordance with the present invention.

| Polymer | $T_g$ (°C) | $T_m$ (°C) | Young's modulus (GPa) |
| --- | --- | --- | --- |
| Polyethylene (LDPE) | -105 or -30 | 105 to 115 | 0,8-1,0 |
| Tyre Rubber | -72 | - | Varying |
| Polypropylene (atactic) | -20 | 160 | 1,0-1,1 |
| Poly(vinyl acetate) (PVAc) | 28 | | |
| Polylactic acid (PLA) | 55-60 | 130-220 | 2,8-3,5 |
| Polyethylene terephthalate (PET) | 69-75 | 260 | 2,8-5,3 |
| Poly(vinyl alcohol) (PVA) | 85 | 230-265 | |
| Poly(vinyl chloride) (PVC) | 82 | 100-260 | 2,9-3,3 |
| Polystyrene | 95 | 240 | 3,0-3,6 |
| Polypropylene (isotactic) | 0 | 165-190 | |
| Poly-3-hyd roxybutyrate PHB | 15 | 175 | 1,4 |
| Poly(methylmethacrylate) (atactic) | 105 | 130-140 | 2,0-3,0 |
| Poly(carbonate) | 145-150 | 167 | 2,0-2,4 |
| Polynorbornene | 215 | | |
| Fused quartz | 1175 | - | 50-80 |
| Dry cellulose | 240 | | 20-150 |
| Dry hemicellulose | 190 | | |
| Dry lignin | 150 | | |
| Dry paper | | | 0,3-6 |
| Stearin | | 70 | |
| Paraffin | | 47-64 | |

In order to further improve the mechano-active functionality in the respect of swelling, the invention may according to one embodiment additionally comprise, in one of the layers or in a separate layer, super absorbent particles or fibers chosen from the group consisting of polyacrylamide, polyacrylic acid, polyacrylate, and polyvinyl alcohol. When using superabsorbent particles or fibers in any layer of the product according to the invention, salt(s), such as sodium salts, e.g. sodium chloride, may be used in the layer capable of releasing tension, to in final use instigate shrinkage of the superabsorbent particles or fibers. The salt and the superabsorbent fibers may be in the same or different layers, in any of the layer(s) capable of releasing tension.

Heat is in one embodiment induced in the final, mechano-active material of the invention, and spread therein, by way of an electrical current passing through a conducting material. By using an electrical current to instigate the change of extension, materials that change their extension reversibly may be manufactured.

Accordingly, in one embodiment, there is provided in either in a separate layer or integrated in the at least one, first fiber-based layer, or the at least one second layer capable of releasing tension, a conductive material chosen from any one of conductive ink, conductive glue, conductive coating, metal laminate, metal foil, a conductive polymer, graphite, or a combination thereof.

In particular, the conducting material is chosen from the group comprising silver, gold, aluminium, copper, carbon, carbon nanotubes, graphite, poly(3,4-ethylenedioxythiophene) poly(styrenesulfonate), poly(acetylene)s, poly(pyrrole)s, poly(thiophene)s, poly(aniline)s, poly(fluorene)s, poly(3-alkylthiophene)s, polytetrathiafulvalenes, polynaphthalenes, poly(p-phenylene sulfide), and poly(para-phenylene vinylene) or a combination thereof.

The conductive material can be patterned along the mechano-active material to optimize the electrically induced heating. The electrical resistance of the conductor can be used to control the speed of motion of the material, e.g. thick conducting lines and a short conducting pattern transverse to the bending direction increase the speed of motion.

According to a second aspect of the invention, there is provided a packaging or display manufactured from the layered mechano-active material as described herein. A display may as used herein comprise advertising displays, labels, marketing materials and garments.

Since the material makes use of and enhances the dimensional change of mechano-active materials comprising at least one fiber based layer, and allows the dimensional change to be controlled, wide-ranging applications of the material can be contemplated.

The controllable packaging or display according to the invention may advantageously be turned into products for large volume applications, making use of manufacturing in e.g. a paper machine. Products to be manufactured include paper electronics, self-opening and/or self-closing paper and packaging products, sensors, security features, interactive products, in-plane and out-of-plane switches and actuators, interior and exterior design elements, display features, advertisements, controllable texture, appearance elements with controllable topography either at the surface or underneath it, lateral and vertical motion enablers, 2D and 3D expanders, interactive fashion, intelligent building materials, authentication products, toys and games.

Self-opening and self-closing paper and packaging products refers to such products that change their extension and bend as a result of stimuli in the form of moisture or heat, during final use. The moisture may be moisture released from e.g. meals during cooking/preparation thereof in e.g. a microwave oven. Heat may likewise be heat generated during cooking/preparation of meals.

In one aspect of the invention there is provided a package with microvents, which microvents open or close as a result of change in moisture or heat during e.g. the preparation of a meal in e.g. a microwave oven. The microvents may cover an entire packaging, or only part of a packaging, such as sides or top cover.

In one embodiment, there is provided packaging with an interactive barrier for any one or several of e.g. $O_2$, $CO_2$, fat, and water, said interactive barrier enabling sealing of the package after e.g. packaging of foodstuffs or construction materials such as cement. This embodiment makes use of the aforementioned microvents, and would make way for e.g. efficient packaging lines.

The material of the invention is in one aspect of the invention used for providing an interactive texture, whereby the topographical folding pattern of the material may result in tactile and / or optical effects. Such optical effects may find their use in displays and labels of e.g. the above-mentioned kinds.

In yet another embodiment of the invention, there is provided a cotton fiber based product formed into a sheet, which sheet changes its extension as a result of e.g. heat or moist exposure. Such sheets may be turned into e.g. monetary printing paper, whereby the authenticity of money could more easily be ascertained. Another application of the said embodiment would be as an authentication label on e.g. heat-inducing appliances.

Change of extension of the material according to the invention results in dimensional changes and/or bending effects of the material. The term "change of extension" as used herein comprises various conformational changes, since the material of the invention may be made into various geometrical forms, such as packaging.

The term "final use" is used herein as a denomination for use of a product according to the invention by e.g. the final consumer or end user, and shall not be confused with use of the invention during e.g. the manufacture of the product.

The invention shall now be described with reference to the accompanying figures. It shall be realised that the examples given are merely intended to illustrate the concept of the invention, and shall in no way whatsoever be seen as limiting the scope of the invention.

**Short Description of the Figures**

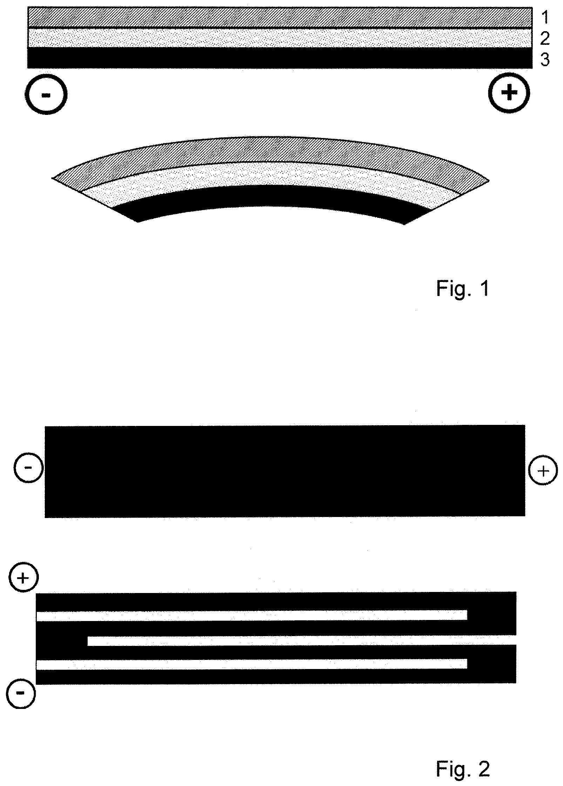

Figure 1 shows a straight (top) and extension-changed, bent (bottom) sheet of a mechano-active material. Layer 3 (black) contains an electrical conductor that heats the paper causing layer 2 (white) to reduce its length relative to layer 1 (gray). The bending can be caused by a combination of contraction of layer 2 and swelling of layer 1, or by one of the layers being capable of releasing tension, whereby its stiffness is reduced and built-in tension in the other layer(s) is released.

Figure 2 shows two examples of lateral patterning of the conducting layer (black) to increase the electrically induced heating of a mechano-active material, used and/or manufactured according to the invention, in the form of a planar sheet. Top, voltage is applied from left to right as in Fig. 1. Bottom, voltage is applied laterally on the left side.

Figure 3 shows a sheet with a gradient structure. The gradient may be a pressure, tension, density, composition, or a fiber orientation gradient across the thickness of the sheet (z-direction).

Figure 4 shows an example of the lateral geometry of an electrically controllable sheet.

Figure 5 shows two examples of lateral geometries of the electrically controllable sheet. The top geometry is slower than the bottom geometry.

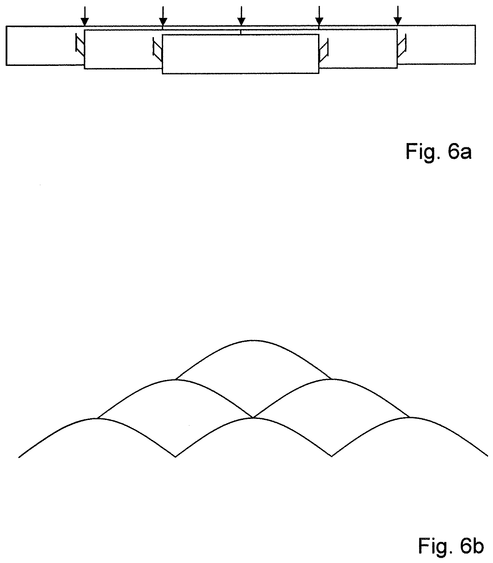

Figure 6 shows an embodiment based on multiple mechano-active sheets organised in a stack, a top view showing how the stack is prepared (a) and a side view showing the stack after bending has occurred (b), respectively.

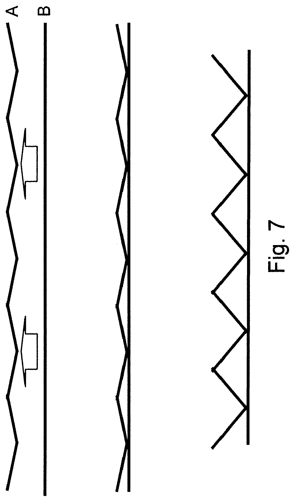

Figure 7 shows a texture embodiment of a mechano-active material, used and/or manufactured according to the invention, with component parts (A) and (B) finally joined together. The bottom figure shows the expanded mechano-active material.

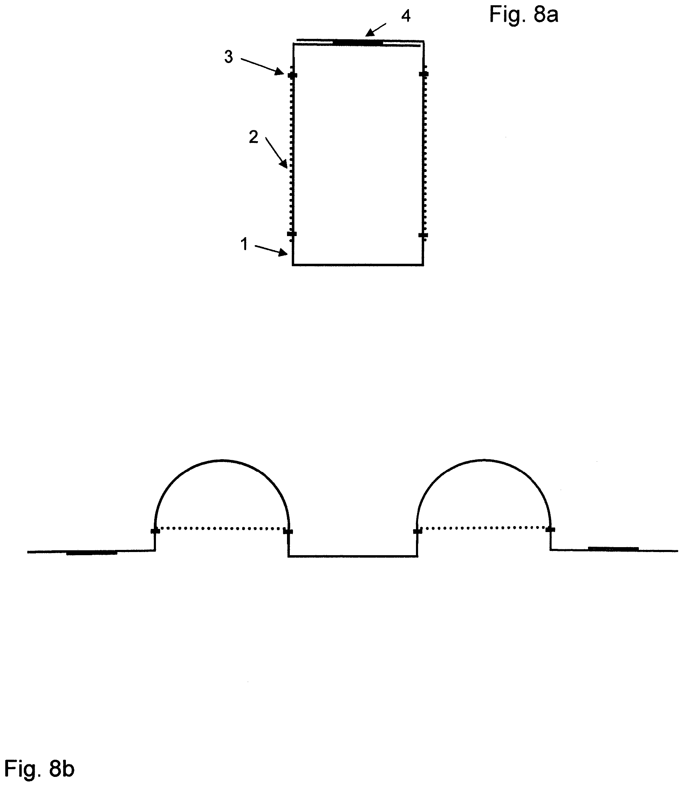

Figure 8 shows a self-opening packaging, as manufactured (a) and in use (b).

**Methods of manufacturing the mechano-active material**

The material of the present invention can be produced at a low cost directly within a paper machine because the invention can be made out of specially prepared pulp, including materials compatible with the paper making process, such as PLA fibers. The PLA fibers can inactivate a layer within the paper sheet by melting and then covering wood or cotton fibers during treatment in a heat compression stage. By inactivation of a layer is meant that the stimuli-responsivity of that layer to temperature or moisture is significantly reduced. Certain paper machines today are directly suited for producing layered paper where each layer can have its own specific properties such as pulp composition, refinement and fiber orientation. A conducting layer can be applied to the paper by adding conductive material directly to the pulp (e.g. conducting fibers) within a coating layer or after the paper making process, such as printing, foiling or lamination.

In the current invention, paper can be used as either a substrate or an integrated part of the layered structure. The papermaking process is briefly described in the following, with an aim to obtain a layered sheet and/or a sheet with a gradient.

Paper is made of pulp, which contains fibers from wood, cotton, or plants extracted by chemical and/or mechanical means, or fibers that are artificially manufactured from polymers, e.g. polylactic acid. The pulp fibers are usually prepared for papermaking by beating and bleaching processes, dilution with water, and blending with natural fillers and chemical additives to enhance the properties of the finished paper and to make the papermaking process run smoother. The blend (stock) usually contains a large amount of water (e.g. 99%) and is sprayed onto a long and wide screen (wire) from the headbox. The function of this section (forming) is to obtain the basic paper web structure and to drain it from some water. In the following pressing section the wet paper web is supported by felts which pass through a number of large rollers squeezing some of the remaining water from the web. After the press section the web still contains a large amount of water, e.g. ~60%, and continues to the drying section. Here the paper finally dries by evaporation as it passes over or between heated cylinders. Depending on the paper grade that is produced, the paper can be further calendered and coated. The calender is composed of smooth heated steel rolls that will increase the smoothness and density of the paper. The coater applies a coating slurry containing white pigments to one or normally both sides of the paper by air jet, brushing or rolling techniques.

The processing of the pulp before it enters the headbox determines its swelling characteristics. Increasing the beating will increase the possible moisture-uptake of the fibers and fiber fragments, but will also increase the cross linking within the paper sheet. Our tests have shown that unbeaten pulp and extensively beaten pulp (85 Shopper-Riegler (SR)) show small dimensional changes when exposed to humidity changes. Shopper-Riegler is a standardised measurement of the drainage rate. Pulps that are moderately beaten (20-60 SR) show larger dimensional changes when they are exposed to variations in humidity. Recycled pulp shows very small dimensional changes as a function of humidity changes. Pulp with high hemicellulose content has an increased sensitivity to humidity changes. Polylactic acid fibers are insensitive to humidity changes compared to wood and cotton fibers.

There is a distinct anisotropy in the moisture-induced swelling of wood and cotton fibers in the radial direction (20-30%) compared to the length direction (~1%).["Pappersteknik", Edited by Christer Fellers and Bo Norman, Royal Institute of Technology, Stockholm, p 346, Sweden, 1996].

This directionality of the swelling is an important characteristic that can be used to control the anisotropic extension of one layer or part thereof to obtain a bending of the sheet. A high fiber orientation anisotropy is an advantage to get a large humidity induced extension within the sheet. The stiffness and elasticity modulus along the fibers is larger than that across the fibers, which influences the bending of the sheet.

A layered sheet can be obtained by stratified forming where multiple jets, containing stock with different composition and structure, create each layer within the sheet. E.g. the fibers in the top and in the bottom layer can be oriented with different degree of alignment along and across the machine direction.

It it also possible to obtain composition and structure gradients across the thickness direction of the sheet using a single headbox [Papermaking Part 1, Stock Preparation and Wet End, chapter "Web Forming", Hannu Paulapuro Editor, 2000, p193]. E.g. the velocity and angle of the headbox jet to the wire can induce fiber orientation anisotropy across the thickness direction.

The mechano-active material according to the invention can be manufactured by adapting currently available methods including but not limited to commercial papermaking and boardmaking processes for e.g. newspaper, graphical paper, banknote paper, dry-formed paper (used e.g. for diapers), non-wowen, and stratified forming of paper. The pulp used may or may not include PLA fibers. The term paper should in this context be understood to mean any (uncoated or coated or printed or laminated) paper or board, paperboard, carton, corrugated board, wood fiber based material, cellulose based material, cotton based or pulp based material. The layered structure can be formed within the process or afterwards, by lamination, foiling, printing, plasma treatment, and/or layer-by-layer application of nanomaterials, superabsorbents, and PLA and other polymers. The layer-by-layer application of nanomaterials is well described in reference [Multilayer Thin Films - Sequential Assembly of Nanocomposite Materials, Edited by Gero Decher and Joseph B. Schlenoff, Wiley-VCH, Weinheim, p3, 2003]. The layer-by-layer method is compatible with papermaking processes because it is water-based and because the polymer solutions or the layered films can be applied directly on the paper machine.

This invention can be based on a polymer-based sheet that has a gradient whose nature may vary depending on the manufacturing process. A gradient in the z-direction (thickness direction) of the sheet is obtained when the sheet is formed as a single layer but has a variation in structure from top to bottom in the thickness direction because of a sidedness in the production process. A gradient of this type may be produced for example using a single headbox with asymmetric dewatering and drying of the sheet. The smaller paper constituents such as fines will pass through the sheet structure more easily than larger constituents. A gradient in the degree of fiber orientation can be produced using a difference in velocity between the jet and the forming fabric at the point of impact. Heating one side of a paper containing PLA fibers above the glass or melting transition temperature of the PLA can induce a structural gradient. The glass transition temperatures of some common polymers are given in Table 1.

By submitting the sheet to different calendering processes, a density and stiffness gradient can be induced. E.g. in temperature gradient calendering, the cold web is in contact with very hot calender rolls, causing high temperature gradients between the surface and the middle of the web.[Papermaking Part 3, Finishing, Edited by Mikko Jokio, TAPPI Press, p47, 1999] When the web is compressed the hotter surface fibers are deformed more than the cooler fibers in the middle of the web.

By submitting the sheet to cylinder or Condebelt drying a density profile in the z-direction can be obtained.[Papermaking Part 2, Drying, Edited by Markku Karlsson, TAPPI Press, p198, 2000] By using e.g. such drying strategies, a tension gradient can be induced, based on the shape of the density profile.

**Examples**

The feasibility and motion-control of the material according to the invention is accounted for below.

(1) Trials were performed on bilayer papers prepared in the Dynamic Sheet Former (DSF) at Innventia AB. Single layered 40 g/m$^2$ and 100 g/m$^2$, and double layered 80 (40+40) g/m$^2$ and 200 (100+100) g/m$^2$ sheets were prepared containing different combinations of birch pulp (0, 20, 35, 60, 83 SR), soft wood pulp (27 SR), and Poly Lactic Acid (PLA) fibers.

The layers were formed at 1150 turns/min or 1500 turns/min where the higher speed resulted in a preferential fiber orientation along the machine direction. A sheet where the two layers had different degrees of fiber orientation resulted in the largest temperature-induced bending. The bending occurs in the direction perpendicular to the preferential fiber direction. Moderately refined (20, 27, 35 SR) paper showed the largest bending. The best sample result was

100 g/m$^2$ birch 35 SR, 1500 turns per min / 100 g/m$^2$ birch 35 SR, 1150 turns per min, in oven 70 °C$\rightarrow$ bending radius ~9 cm.

When the sheets containing PLA fibers (one of the bilayers containing 25 % or 40 % PLA) were pressed at 170 °C for 5 min, the sheets became stiffer and stronger. These warm pressed PLA containing sheets also showed improved reversibility, i.e. had the ability to go back to their original shape in ~10 seconds after they were taken out of the oven. The warm pressed PLA containing sheets also started to activate (i.e. bended) at a low temperature, e.g. 40 °C. The best sample result was:

Warm pressed 100 g/m$^2$ birch 35 SR, 1500 turns per min / 100 g/m$^2$ 75% softwood 27 SR + 25% PLA fibers, 1150 turns per min, in oven 70 °C→ bending radius ~11 cm.

The single layered sheets and the double layered sheets were air brush sprayed on one side with a graphite based conductive glue up to 5 times and were then warm pressed. Increasing the thickness of the conducting layer increased its conductivity but also the sheet stiffness. A high conductivity induces a high temperature gradient in the sheet given a certain voltage. 3-5 layers of conductive glue gave a good tradeoff between conductivity and stiffness. The resistance across a sheet with the dimension 10 cm × 2,5 cm was between 100-2000 Ω. A voltage of 30 V was applied over the paper strips to obtain a good temperature stimulated bending. The sheets without PLA showed the largest bending based on electrical stimulation. Thinner and lighter sheets bended quickly compared to thicker and heavier sheets.

Warm pressed 100 g/m$^2$ birch 35 SR, 1500 turns per min / 5 layers of graphite glue, 30 V across structure below (length 12 cm, width 1 cm) → bending radius ~10 cm.

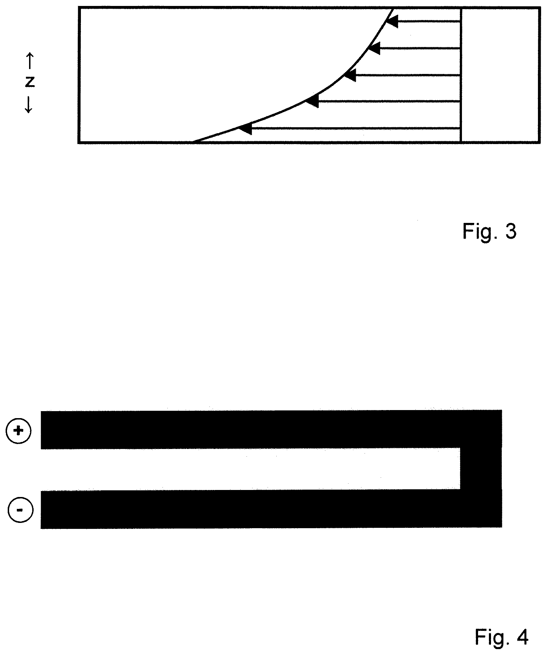

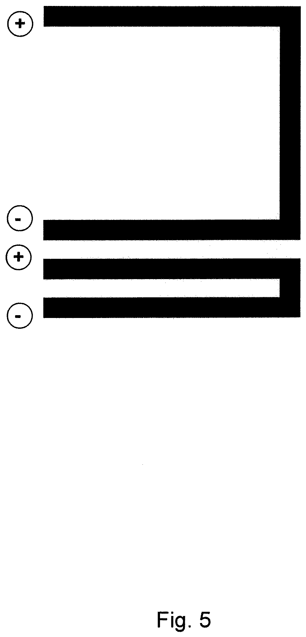

(2) A double layered sheet (100+100 g/m$^2$, 5×14 g/ cm$^2$) containing 40 % PLA in one layer was warmpressed at 170 °C for 5 min to melt the PLA and later formed in an oven (200 °C) to a bended structure having a 1 cm radius (see Figure 4). The sheet was then strained to a flat state, and melted stearin was added (sucked into the paper) as a tension-retaining agent to the side of the sheet without PLA. After the stearin had solidified, it stiffened the sheet to support a bended structure with the radius 7 cm, which is considerably flatter than 1 cm. When the sheet was put into an oven (100 °C) the stearin rapidly melted, relaxing the induced tension to a 1.5 cm radius in 4 s.
Warm pressed 100+100 g/m$^2$ (birch 35 SR, 1500 turns per min + stearin / 60% birch 35 SR + 40% PLA, 1150 turns per min), length 14 cm, width 5 cm, radius 7 cm + 100 °C → bending radius 1.5 cm.
(3) The speed of the paper bending can be controlled by the geometry of the sheet (see Figure 5). The resistance is 30% higher for the topmost structure, which results in a slower heating and hence slower motion, compared to the structure at the bottom, given that the same voltage is applied over both structures.

**Claims**

1.  Use of a layered mechano-active material comprising

    (a) at least one first fiber-based layer having a strained state obtained at a temperature below Tg, and
    (b) at least one second layer supporting the at least one first fiber-based layer in the strained state and capable of releasing tension,

    whereby the extension of the material is anisotropically controlled by heat and/or moisture such that the second layer softens to thereby release tension and enable the first fiber-based layer to revert to its non-strained state, and wherein change of extension of the material results in dimensional changes and/or bending effects of the material.

2.  Use according to claim 1, wherein the fiber-based material in (a) is chosen from the group consisting of wood based fibers, plant based fibers, and synthetic fibers.

3.  Use according to claim 2, wherein the fiber-based material in (a) is cotton or microfibrillated cellulose.

4.  Use according to claim 1, wherein the at least one layer capable of releasing tension comprises an agent chosen from the group consisting of wax, fat, stearin, sodium salt, synthetic fibers, polymer powder, polymer particles, and polymer films.

5.  Use according to claim 1, additionally comprising, in one or more of the layers or in a separate layer, super absorbent particles or fibers chosen from the group consisting of polyacrylamide, polyacrylic acid, polyacrylate, and polyvinyl alcohol.

6. Use according to claim 1, wherein in a separate layer or integrated in (a) or (b) there is a conductive material chosen from any one of conductive ink, conductive glue, conductive coating, metal laminate, metal foil, a conductive polymer, graphite, or a combination thereof; and wherein the conductive material is chosen from the group consisting of silver, gold, aluminium, copper, carbon, carbon nanotubes, graphite, poly(3,4-ethylenedioxythiophene), poly(styrenesulfonate), poly(acetylene)s, poly(pyrrole)s, poly(thiophene)s, poly(aniline)s, poly(fluorene)s, poly(3-alkylthiophene)s, polytetrathiafulvalenes, polynaphthalenes, poly(p-phenylene sulfide), and poly(para-phenylene vinylene) or a combination thereof.

7. Use according to claim 6, wherein the conductive material is used to induce heat by way of an electrical current.

8. Use of a layered mechano-active material according to any one of the preceding claims, wherein a packaging or display has been manufactured from said layered mechano-active material.

9. Use of a layered mechano-active material according to any of the claims 1-7, wherein heat or moisture responsive microvents of a packaging have been manufactured from said layered mechano-active material.

10. Use of a layered mechano-active material according to any one of the claims 1-7, wherein a self-opening or self-closing packaging has been manufactured from said layered mechano-active material.

11. Use of a layered mechano-active material according to any of the claims 1-10, wherein an interactive texture has been manufactured from said layered mechano-active material, whereby topographical folding patterns and/or optical effects are obtained.

12. Method of manufacturing a layered mechano-active material,
    the layered mechano-active material comprising

    (a) at least one first fiber-based layer having a strained state obtained at a temperature below Tg, and
    (b) at least one second layer supporting the at least one first fiber-based layer in the strained state and capable of releasing tension,

    whereby the extension of the material is anisotropically controllable by heat and/or moisture such that the second layer softens to thereby release tension and thereby enables the first fiber-based layer to revert to its non-strained state, and wherein change of extension of the material results in dimensional changes and/or bending effects of the material;
    the method comprising producing a strained state of the first fiber-based layer at a temperature below Tg, retaining the strained state by adding at least one second layer capable of releasing tension, said second layer or an agent within said second layer being in soft state above Tg or Tm, allowing the second layer or the agent in the second layer to harden and become stiff enough to support the strained state without additional force.

13. The method according to claim 12, wherein the fiber-based material in (a) is chosen from the group consisting of wood based fibers, plant based fibers such as cotton, microfibrillated cellulose, and synthetic fibers.

14. The method according to claim 12, wherein the at least one layer capable of releasing tension comprises an agent chosen from the group consisting of wax, fat, stearin, sodium salt, synthetic fibers, polymer powder, polymer particles, and polymer films.

15. The method according to claim 12, wherein in a separate layer or integrated in (a) or (b) there is a conductive material chosen from any one of conductive ink, conductive glue, conductive coating, metal laminate, metal foil, a conductive polymer, graphite, or a combination thereof; and wherein the conductive material is chosen from the group consisting of silver, gold, aluminium, copper, carbon, carbon nanotubes, graphite, poly(3,4-ethylenedioxythiophene), poly(styrenesulfonate), poly(acetylene)s, poly(pyrrole)s, poly(thiophene)s, poly(aniline)s, poly(fluorene)s, poly(3-alkylthiophene)s, polytetrathiafulvalenes, polynaphthalenes, poly(p-phenylene sulfide), and poly(para-phenylene vinylene) or a combination thereof.

**Patentansprüche**

1. Verwendung eines geschichteten mechano-aktiven Materials umfassend

   (a) mindestens eine erste faserbasierte Schicht, die einen gedehnten Zustand aufweist, der bei einer Temperatur unter Tg erhalten worden ist, und
   (b) mindestens eine zweite Schicht, die die mindestens eine erste faserbasierte Schicht im gedehnten Zustand unterstützt und zum Abbau von Spannungen fähig ist,

   wobei die Dehnung des Materials durch Wärme und/oder Feuchtigkeit derart anisotropisch gesteuert wird, dass die zweite Schicht erweicht, um dadurch Spannungen abzubauen und der ersten faserbasierten Schicht zu ermöglichen, in ihren nicht gedehnten Zustand zurückzukehren, und wobei eine Dehnungsänderung des Materials zu dimensionalen Änderungen oder Biegeeffekten des Materials führt.

2. Verwendung nach Anspruch 1, wobei das faserbasierte Material unter (a) aus der Gruppe bestehend aus holzbasierten Fasern, pflanzenbasierten Fasern und synthetischen Fasern ausgewählt ist.

3. Verwendung nach Anspruch 2, wobei das faserbasierte Material (a) Baumwolle oder mikrofibrillierte Cellulose ist.

4. Verwendung nach Anspruch 1, wobei die mindestens eine Schicht, die zum Abbau von Spannungen fähig ist, ein Mittel umfasst, das aus der Gruppe bestehend aus Wachs, Fett, Stearin, Natriumsalz, synthetischen Fasern, Polymerpulver, Polymerpartikeln und Polymerfilmen besteht.

5. Verwendung nach Anspruch 1, zusätzlich umfassend, in einer oder mehr der Schichten oder in einer gesonderten Schicht, superabsorbierende Partikel oder Fasern, die aus der Gruppe bestehend aus Polyacrylamid, Polyacrylsäure, Polyacrylat und Polyvinylalkohol ausgewählt sind.

6. Verwendung nach Anspruch 1, wobei in einer gesonderten Schicht, oder in (a) oder (b) eingebettet, ein leitfähiges Material vorhanden ist, das aus einem aus folgenden ausgewählt ist: leitfähige Tinte, leitfähiger Kleber, leitfähige Beschichtung, Metalllaminat, Metallfolie, ein leitfähiges Polymer, Graphit oder eine Kombination davon; und wobei das leitfähige Material aus der Gruppe bestehend aus Silber, Gold, Aluminium, Kupfer, Kohlenstoff, Kohlenstoff-Nanoröhrchen, Graphit, Poly(3,4-ethylendioxythiophen), Poly(styrolsulfonat), Poly(acetylen)en, Poly(pyrrol)en, Poly(thiophen)en, Poly(anilin)en, Poly(fluoren)en, Poly(3-alkylthiophen)en, Polytetrathiafulvalenen, Polynaphthalenen, Poly(p-phenylensulfid) und Poly(para-phenylenvinylen) oder einer Kombination davon ausgewählt ist.

7. Verwendung nach Anspruch 6, wobei das leitfähige Material zum Induzieren von Wärme durch einen elektrischen Strom verwendet wird.

8. Verwendung eines geschichteten mechano-aktiven Materials nach einem der vorgehenden Ansprüche, wobei eine Verpackung oder eine Anzeige aus dem geschichteten mechano-aktiven Material hergestellt worden ist.

9. Verwendung eines geschichteten mechano-aktiven Materials nach einem der vorgehenden Ansprüche 1-7, wobei wärme- oder feuchteempfindliche Microvents einer Verpackung aus dem geschichteten mechano-aktiven Material hergestellt worden sind.

10. Verwendung eines geschichteten mechano-aktiven Materials nach einem der Ansprüche 1-7, wobei eine selbstöffnende oder selbstschließende Verpackung aus dem geschichteten mechano-aktiven Material hergestellt worden ist.

11. Verwendung eines geschichteten mechano-aktivem Materials nach einem der Ansprüche 1-10, wobei eine interaktive Struktur aus dem geschichteten mechano-aktiven Material hergestellt worden ist, wodurch topographische Faltungsmuster und/oder optische Effekte erhalten werden.

12. Verfahren zur Herstellung eines geschichteten mechano-aktiven Materials,
    wobei das geschichtete mechano-aktive Material Folgendes umfasst

    (a) mindestens eine erste faserbasierte Schicht, die eine gedehnten Zustand aufweist, der bei einer Temperatur unter Tg erhalten worden ist, und
    (b) mindestens eine zweite Schicht, die die mindestens eine erste faserbasierte Schicht im gedehnten Zustand unterstützt und zum Abbau von Spannungen fähig ist,

wobei die Dehnung des Materials durch Wärme und/oder Feuchtigkeit anisotropisch steuerbar, so dass die zweite Schicht erweicht, um dadurch Spannungen abzubauen, und dadurch der ersten faserbasierten Schicht ermöglicht, in ihren nicht gedehnten Zustand zurückzukehren, und wobei eine Dehnungsänderung des Materials zu dimensionalen Änderungen oder Biegeeffekten des Materials führt; das Verfahren umfassend die Herstellung eines gedehnten Zustands der ersten faserbasierten Schicht bei einer Temperatur unter Tg, die Beibehaltung des gedehnten Zustands durch die Zugabe mindestens einer zweiten Schicht, die zum Abbau von Spannungen fähig ist, wobei die zweite Schicht oder ein Mittel in der zweiten Schicht sich in einem weichen Zustand über Tg oder Tm befindet, wodurch der zweiten Schicht oder dem Mittel in der zweiten Schicht ermöglicht wird, auszuhärten und steif genug zu werden, um den gedehnten Zustand ohne zusätzliche Kraft zu unterstützen.

**13.** Verfahren nach Anspruch 12, wobei das faserbasierte Material in (a) aus der Gruppe bestehend aus holzbasierten Fasern, pflanzenbasierten Fasern, wie beispielsweise Baumwolle, mikrofibrillierter Cellulose und synthetischen Fasern ausgewählt ist.

**14.** Verwendung nach Anspruch 12, wobei die mindestens eine Schicht, die zum Abbau von Spannungen fähig ist, ein Mittel umfasst, das aus der Gruppe bestehend aus Wachs, Fett, Stearin, Natriumsalz, synthetischen Fasern, Polymerpulver, Polymerpartikeln und Polymerfilmen besteht.

**15.** Verfahren nach Anspruch 12, wobei in einer gesonderten Schicht, oder in (a) oder (b) eingebettet, ein leitfähiges Material vorhanden ist, das aus einem aus folgenden ausgewählt ist: leitfähige Tinte, leitfähiger Kleber, leitfähige Beschichtung, Metalllaminat, Metallfolie, ein leitfähiges Polymer, Graphit oder eine Kombination davon; und wobei das leitfähige Material aus der Gruppe bestehend aus Silber, Gold, Aluminium, Kupfer, Kohlenstoff, Kohlenstoff-Nanoröhrchen, Graphit, Poly(3,4-ethylendioxythiophen), Poly(styrolsulfonat), Poly(acetylen)en, Poly(pyrrol)en, Poly(thiophen)en, Poly(anilin)en, Poly(fluoren)en, Poly(3-alkylthiophen)en, Polytetrathiafulvalenen, Polynaphthalenen, Poly(p-phenylensulfid) und Poly(para-phenylenvinylen) oder einer Kombination davon ausgewählt ist.

## Revendications

**1.** Utilisation d'un matériau mécano-actif en couches comprenant

(a) au moins une première couche à base de fibres ayant un état contraint obtenu à une température inférieure à Tg, et
(b) au moins une deuxième couche supportant l'au moins une première couche à base de fibres dans l'état contraint et capable de libérer une tension,

l'extension du matériau étant contrôlée de manière anisotropique par la chaleur et/ou l'humidité si bien que la deuxième couche s'adoucit pour ainsi libérer la tension et permettre à la première couche à base de fibres de revenir à son état non contraint, et la modification de l'extension du matériau aboutissant à des modifications dimensionnelles et/ou des effets de flexion du matériau.

**2.** Utilisation selon la revendication 1, dans laquelle le matériau à base de fibres en (a) est choisi dans le groupe constitué par les fibres à base de bois, les fibres à base de plantes et les fibres synthétiques.

**3.** Utilisation selon la revendication 2, dans laquelle le matériau à base de fibres en (a) est le coton ou la cellulose microfibrillée.

**4.** Utilisation selon la revendication 1, dans laquelle l'au moins une couche capable de libérer une tension comprend un agent choisi dans le groupe constitué par la cire, la graisse, la stéarine, le sel de sodium, les fibres synthétiques, la poudre de polymère, les particules de polymère et les films polymères.

**5.** Utilisation selon la revendication 1, comprenant en outre, dans l'une ou plusieurs des couches ou dans une couche séparée, des particules ou des fibres super absorbantes choisies parmi le groupe constitué de polyacrylamide, d'acide polyacrylique, de polyacrylate et d'alcool polyvinylique.

**6.** Utilisation selon la revendication 1, dans laquelle dans une couche séparée ou intégrée en (a) ou (b), il existe un matériau conducteur choisi parmi l'encre conductrice, la colle conductrice, le revêtement conducteur, le stratifié métallique, la feuille métallique, un polymère conducteur, le graphite ou une combinaison de ceux-ci; et dans laquelle le matériau conducteur est choisi dans le groupe comprenant l'argent, l'or, l'aluminium, le cuivre, le carbone, les nanotubes de carbone, le graphite, poly(3,4-éthylènedioxythiophène), poly(styrisulfonate), poly(acétylène)s, poly(pyrrole)s, poly(thiophène)s, poly(aniline)s, poly(fluorène)s, poly(3-alkylthiophène)s, polytétrathiafulvalenes, polynaphtalènes, poly(p-phénylène sulfure) et poly(para-phénylène vinylène) ou une combinaison de ceux-ci.

**7.** Utilisation selon la revendication 6, dans laquelle le matériau conducteur est utilisé pour induire de la chaleur par un courant électrique.

**8.** Utilisation d'un matériau mécano-actif en couches selon l'une quelconque des revendications précédentes, dans laquelle un emballage ou affichage a été fabriqué à partir dudit matériau mécano-actif en couches.

**9.** Utilisation d'un matériau mécano-actif en couches selon l'une quelconque des revendications 1 à 7, dans laquelle des microvents sensibles à la chaleur ou à l'humidité d'un emballage ont été fabriqués à partir dudit matériau mécano-actif en couches.

**10.** Utilisation d'un matériau mécano-actif en couches selon l'une quelconque des revendications 1 à 7, dans laquelle un emballage à ouverture automatique ou à fermeture automatique a été fabriqué à partir dudit matériau mécano-actif en couches.

**11.** Utilisation d'un matériau mécano-actif en couches selon l'une quelconque des revendications 1 à 10, dans laquelle une texture interactive a été fabriquée à partir dudit matériau mécano-actif en couches, des motifs de pliage topographiques et/ou des effets optiques étant obtenus.

**12.** Procédé de fabrication d'un matériau mécano-actif en couches,
le matériau mécano-actif en couches comprenant

(a) au moins une première couche à base de fibres ayant un état contraint obtenu à une température inférieure à Tg, et
(b) au moins une deuxième couche supportant l'au moins une première couche à base de fibres dans l'état contraint et capable de libérer une tension,

l'extension du matériau étant contrôlée de manière anisotropique par la chaleur et/ou l'humidité si bien que la deuxième couche s'adoucit pour ainsi libérer la tension et ainsi permettre à la première couche à base de fibres de revenir à son état non contraint, et la modification de l'extension du matériau aboutissant à des modifications dimensionnelles et/ou des effets de flexion du matériau;
le procédé comprenant la fabrication d'un état contraint de la première couche à base de fibres à une température inférieure à Tg, retenant l'état contraint en ajoutant au moins une deuxième couche capable de libérer une tension, ladite deuxième couche ou un agent dans ladite deuxième couche étant dans un état doux supérieur à Tg ou Tm, permettant à la deuxième couche ou l'agent dans la deuxième couche de durcir et de se raidir suffisamment pour supporter l'état contraint sans force supplémentaire.

**13.** Procédé selon la revendication 12, dans lequel le matériau à base de fibres en (a) est choisi dans le groupe constitué par les fibres à base de bois, les fibres à base de plantes telles que le coton ou la cellulose microfibrillée, et les fibres synthétiques.

**14.** Procédé selon la revendication 12, dans laquelle l'au moins une couche capable de libérer une tension comprend un agent choisi dans le groupe constitué par la cire, la graisse, la stéarine, le sel de sodium, les fibres synthétiques, la poudre de polymère, les particules de polymère et les films polymères.

**15.** Procédé selon la revendication 12, dans laquelle dans une couche séparée ou intégrée en (a) ou (b), il existe un matériau conducteur choisi parmi l'encre conductrice, la colle conductrice, le revêtement conducteur, le stratifié métallique, la feuille métallique, un polymère conducteur, du graphite ou une combinaison de ceux-ci; et dans laquelle le matériau conducteur est choisi dans le groupe comprenant l'argent, l'or, l'aluminium, le cuivre, le carbone, les nanotubes de carbone, le graphite, poly(3,4-éthylènedioxythiophène), poly(styrisulfonate), poly(acétylène)s, poly(pyrrole)s, poly(thiophène)s, poly(aniline)s, poly(fluorène)s, poly(3-alkylthiophène)s, polytétrathiafulvalenes, polynaphtalènes, poly(p-phénylène sulfure) et poly(para-phénylène vinylène) ou une combinaison de ceux-ci.

Fig. 1

Fig. 2

Fig. 3

Fig. 4

EP 2 326 503 B1

Fig. 5

16

Fig. 6a

Fig. 6b

Fig. 7

EP 2 326 503 B1

Fig. 8a

Fig. 8b

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Pappersteknik. Royal Institute of Technology, 1996
- Handbook of Physical Testing of Paper. 2002, vol. 1, 115
- Pappersteknik. Royal Institute of Technology, 1996, 346
- Stock Preparation and Wet End. Papermaking. 2000, 193
- Multilayer Thin Films - Sequential Assembly of Nanocomposite Materials. Wiley-VCH, 2003, 3
- Papermaking. TAPPI Press, 1999, 47
- Papermaking. TAPPI Press, 2000, 198